# EUROPEAN PATENT SPECIFICATION

(11) **EP 2 358 207 B1**
(45) Date of publication and mention of the grant of the patent: **01.03.2017**
(21) Application number: 09760060.5
(22) Date of filing: 20.11.2009
(51) Int. Cl.: A21D 2/18, A21D 8/06, A21D 10/04, A21D 13/02, A21D 13/45, A23L 7/10

(54) **WHOLE OAT MICROWAVABLE BAKED ITEMS**
IN DER MIKROWELLE ERHITZBARE VOLLKORNHAFER-BACKWAREN
ARTICLES CUITS D'AVOINE COMPLET POUVANT PASSER AUX MICRO-ONDES

(30) Priority: 21.11.2008 US 116752 P
(43) Date of publication of application: 24.08.2011
(73) Proprietor: The Quaker Oats Company, Chicago, IL 60661 (US)
(72) Inventor: HANSA, Jim, Algonquin Illinois 60102 (US); SLEYKO, Andrew, Chicago Illinois 60618 (US)
(74) Representative: Jenkins, Peter David
(86) International application number: PCT/US2009/065342
(87) International publication number: WO 2010/059945

(56) References cited:
- WO-A1-2006/025112
- JP-A- 8 000 159
- US-A- 4 950 140
- US-A- 5 015 486
- US-A- 5 147 665
- US-A- 5 554 402
- US-A1- 2006 246 198
- Anonymous: "Microwave Oatmeal cake recipe" 31 March 2008 (2008-03-31), pages 1-2, XP002566112 Retrieved from the Internet: URL:http://web.archive.org/web/20080331234 753/http://www.tasteofhome.com/Recipes/Mic rowave-Oatmeal-Cake> [retrieved on 2010-01-27]

## Description

### FIELD OF THE INVENTION

This invention relates to microwavable baked items prepared with whole oats.

### BACKGROUND OF THE INVENTION

There exists a need for healthy and nutritious conveniently baked items. Document US 5147665 discloses how to improve shelf-life of baked goods which comprise whole grains, such as oat.

### BRIEF SUMMARY OF THE INVENTION

A first embodiment of the invention is directed to a combination of microwavable whole grains and a bakery system comprising leavening and texturizing ingredients. The whole grains, leavening, and texturizing ingredients are combined with water and stirred into a batter to create a convenient microwavable warm whole grain baked analog. The whole grain is whole oats.

The microwaved product has a soft tender texture like a muffin or a variety of textures, i.e. cookies, cakes, and breads. A benefit is that less sugar and fats are needed for a good tasting product.

### DETAILED DESCRIPTION OF THE INVENTION

Aspects of the invention are directed to a process and formulation to create microwave baked products containing whole oats. The products produced in accordance with the present invention provide the nutrition of a bowl of instant oatmeal through the high whole oat content of the batter and additional vitamins and minerals.

The microwavable whole grain batter comprises whole oats, at least one leavening agent, at least one texturizing agent, and water.

The whole grains are whole oats. The whole oats comprise 30 wt% to 50 wt %, based on total weight of the batter. The flakes are added in suitable amounts to provide appropriate cake density and whole grain piece identity. Two types of oats are combined wherein the oats are a combination of quick oats and baby oat flakes such as, for example, a combination of 50/50 ratio using a quick oat and baby oat flakes. The quick oat flake has a flake thickness of 0.040 cm (0.016 inches) to 0.059 cm (0.020 inches), typically about 0.046 cm (about 0.018 inches), flaked from a cut groat 1/3 - 1/6 its original size, and a baby instant oat with a flake thickness of 0.033 (0.013 inches) to 0.051 cm (0.020 inches), typically about 0.044 cm (about 0.0175 inches), and piece size of the oat flake 1/9 - 1/36 the original size of the native oats kernel.

Suitable leavening agents include, but are not limited to, baking powder, baking soda, monocalcium phosphate, potassium bitatrate (cream of tarter) and the like. Suitable amounts of acids are 0.1% to 0.4 wt% based on total weight of the batter.

An acid, such as citric acid, may be included to initiate a reaction with the leavening agents (e.g. sodium bicarbonate) prior to microwaving to increase leavening thus lightening cake density. Suitable amounts of acids are 0.1% to 0.4 wt%, typically 0.2 wt%, based on total weight of the batter.

Suitable texturizing agents include starches, modified starches (e.g gelatinized starches), gum acacias, alginates, carrageenans, carboxymethylcellulose, gelatin, guar gum, locust bean gum, pectin, and xanthan gum. Suitable instant starches include, but are not limited to, corn starch and rice starch. The texturizing agents systems are used in amounts to produce the proper level of cake moistness and density through proper water adsorption. Suitable amounts of texturizing agents are about 0.1% to about 0.4 wt% based on total weight of the batter.

In addition to the above, the batter may include flour, sugar, proteins, and various other ingredients typically found in baked products such as nuts and chips.

Suitable flours include, but are not limited to, cake flour, wheat flour, corn flour, and oat flour. Suitable sugars include, but are not limited to, white sugar and brown sugar. Suitable proteins include, but are not limited to, eggs, egg whites, sodium caseinate, whey, wheat gluten, and the like.

Fruit pieces or nuts or chips such as chocolate chips or butterscotch chips, for example, may be included.

Flavors, colors, and other minor components also may be added. For example, flavors may be added to enhance or complement fruits or nuts already present, or simply as the sole flavor component. Not only may fruit and nut flavors be added, but also herbs and spices such as cinnamon, cloves, nutmeg, and the like may be used. Maple and other flavors also can be added. Suitable flavors are known to skilled practitioners.

A batter is prepared by combining, for example, whole grains, leavenings agents, texturizing agents, flour, sugar, emulsifiers, and proteins, to form a dry mixture. Water and other moist ingredients are added to the dry mixture to form a batter.

The whole grains may be prepared by first removing the hulls from the whole grains. The grains are thermally processed to deactivate enzymes and provide desired hydrating and flavor properties. For example, the grains may be cut into 3-5 pieces and then cooked. The cooked grains are flaked. The flaked grains including all of the broken and small pieces are used in the product.

Generally the amount of fruit and fiber can be higher than an average bake item containing no whole grains and the amount of sugar and fat can be lower than an average baked item containing no whole grains. This provides a much healthier alternative to off the shelf muffin mixes.

Microwave energy is then used to produce fresh nutritious bakery item. Typically the item is baked for 1 to 2 minutes, more typically, 1 to 1.5 minutes in a 1000 watt oven.

The present invention allows for the consumption of considerable amounts of whole grains, for example 20 to 30g per 56 g serving in a fresh baked form for consumers who desire the health benefits of whole grains, but do not like the texture or taste of oatmeal porridge, for example.

The baked product may include a crusted topping. The topping is applied pre-microwaving. Suitable toppings include oat flakes, granola, breadcrumbs, and crisps. These may be combined with sugar, butter or shortening, and a spice or flavor. A suitable non-limiting example would be 3.5 wt% oat flakes, 3.8 wt% brown sugar, 0.9 wt% cinnamon, and 2.5 wt% shortening based on the total weigh of the baked product. The topping may be a dry crunchy top.

The process of making the microwaved baked product creates a fresh baked muffin with much lower fat and sugar and higher fiber and protein than traditional muffins. The product offers shelf-life advantages over traditional muffins, since it can be maintained for longer periods of time without the use of preservatives. The product offers a conveniently short preparation time over a traditionally baked muffin. For example, 1 to 2 minutes.

The bakery system allows uniform distribution of water throughout the baked item as well as a properly expanded texture. The grains are processed to allow for visual piece identity in the finished product without the creation of pastiness or chewiness.

Importantly, shaped items may be prepared in the microwave as the formulations will expand to the size of the cooking vessel and hold its form after completion. One example would be a muffin shaped container. Moreover, the viscous nature and property due to trapped steam of the cooked whole grain coupled with the gas generating leavening system combine to give a significant volume increase creating a light cell structure when microwaved.

The items can be eaten in the cooking vessel or can easily be removed for in-hand consumption. The product made in accordance with the present invention may be muffins, cookies, mini-loaves, cakes, coffee cakes, quick breads, corn bread, cookies, sweet rolls, and cobblers. The levels of the ingredients are adjusted to create desired textures.

A fruit filling can be created from a dry mix through the combination of freeze-dried or air dried fruit (12.5%) and a pre-gelatinized starch (1.75%) and the addition of 2 tsps of water. The filling can be used to bake a cobbler when the cobbler batter is poured on top and microwaved for 1 min. This technique can also be used to create gravies, sauces, soups to be used in combination with the microwaved batter.

The skilled practitioner recognizes that whole oat groats are whole hulled oat grains that have been processed before flaking. Oat groats are the kernel product resulting from the cleaning and drying of oats, which removes the hulls. The processed oats useful in the present invention are prepared from whole oat groats. The whole oat groats are steamed to deactivate enzymes and then processed in a kiln, or dryer, to develop flavor and to at least partially cook starch in the groat. The groat then is steamed again to condition the groat in preparation for flaking. The flakes then are dried to the desired moisture content. The conditions under which these processes typically are carried out are known to a skilled practitioner.

After steaming, the groats are subjected to high temperature treatment in, for example, a kiln or a dryer, until the whole oat groats have reached a temperature of from 107 °C to 157°C (from 225° to 315° F), preferably from 135°C to 149°C (from 275°F to 285° F), and a moisture content of from 2 to 8 percent. This treatment is used to develop flavor and can occur in any commercially available hot air oven or dryer or other suitable available apparatus. This drying step, also called toasting, typically requires a period of 4 minutes to 120 minutes, preferably from 15 to 25 minutes. During this treatment, the whole oat groats are continually agitated in order to prevent overheating of any particular portion of the oat groats. After the heating treatment is completed, the oat groats must be cooled rapidly to below 66°C (150°F) in order to stop the toasting operation and prevent overtoasting.

The cooled, toasted oat groats then may be pearled to remove the outer layer (sometimes called the pericarp) of the oat groats. The pearling of the oat groats can be performed by any well-known and commercially available abrasive roll.

The pearled groats then are steamed prior to being flaked. The steaming process is a means of reducing the amount of fines and breakages in the flaked product. The oats are heated utilizing steam at a temperature of from 88° to 99°C (from 190° to 210°F), preferably 96°C (205°F) for a period of from 2 minutes to 5 minutes, preferably 3 minutes. The oats then have a moisture content of from 13 to 16 percent, preferably 15 percent.

The hot, steamed oats then are fed to the conventional flaking rolls and equipment. With the guidance provided herein, the skilled practitioner will be able to prepare whole oat groats in an appropriate manner.

Thus-prepared hulled oat grains then are flaked by any known method. The prepared groats may be steel-cut, rolled, or flaked in any manner known to the skilled practitioner that will yield the desired thickness. The groats are not cut, and therefore yield whole oat flakes that have the advantage of being a healthful, whole-grain product.

The skilled practitioner recognizes that typical commercial flaking processes will result in some small percentage, perhaps 5 to 10 percent, of flakes that are thinner and some that are thicker than the endpoints of the range. So long as the percentage of flakes outside the range remains a small percentage of the total, any potential adverse effect will be minimized.

Because whole oat groats are flaked, the dimensions of the oat flakes typically vary as the sizes of oat groats varies at the point at which the flake is formed. For the purposes of this invention, the thickness is maintained within the ranges disclosed herein and the remaining dimensions are not strictly controlled.

The resultant product is a tasty whole grain product appreciated by consumers for both its organoleptic properties and characteristics and its quick and easy method for preparation. The product also is healthy and nutritious, as it is a whole grain product.

### EXAMPLES

### Example 1 (Outside the scope of the present invention)

Apple Cinnamon Microwaveable Muffin
Oats - 30g
Baking Mix - 27 g
Apple Pieces -10 g
Apple Flavor -1 g
Caramel Color - 0.12 g
Water - 63 g

Baking Mix Ingredients
Cake Flour
Brown Sugar
Bakery Blend (whey, propylene glycol monoesters, mono triglycerides, sodium caseinate, sodium stearoyl lactylate, di sodium phosphate)* (3-5%)
Dried Whole Egg
Oil
Instant Clear gel (modified corn starch)*
Mono Calcium Phosphate
Dextrose
Baking Soda
Dried Egg White
Salt
Stabilizer Blend (carrageenan, guar, lecithin)*
Stabilizer Blend (carrageenan, guar, lecithin)*

The dry ingredients are combined in a container and mixed. Water is added and the batter is stirred until nice and homogenous. The batter is added to muffin mold and then microwaved in a 1000 watt microwave for 1:15 minutes. The muffins are cooled for 1 minute and then discharged from mold.

### Example 2

Apple Cinnamon Microwaveable Muffin
Whole Grain Oats - 41.1 g
Brown Sugar - 21.0 g
Apples - 12.5 g
Sugar - 3.48 g
Wheat flour - 3.47 g
Whole eggs - 3.45 g
Flavor - 2.92 g
Honey - 1.73 g

Other ingredients: Soybean Oil, Enriched Bleach Flour, Whey, Propolyene Glycol Monesters, Mono, Di glycerides, Vegetable Shortening, Maltodextrin, Monocalcium Phosphate, Egg White, Salt, Dextrose, Sodium Bicarbonate, Sodium Caseinate,carrageeenan, Guar Gum, Soy Lecithin, SSL, Cinnamon, sodium stearate, disodium phosphate, ascorbic acid, citric acid, niacinamide, Pyrodoxinne, hydrochloride, riboflavin, thiamin mononitrate, folic acid.

The ingredients are mixed together. The batter is added to muffin mold and then microwaved. The muffins are cooled and then discharged from mold.

## Claims

1. A microwavable whole oat batter comprising whole oats, at least one leavening agent, at least one texturizing agent, and water; wherein the whole oats comprise 30 wt% to 50 wt% of the total batter weight, wherein the oats are a combination of quick oat flakes having a flake thickness of 0.040 cm (0.016 inches) to 0.051 cm (0.020 inches), flaked from a cut groat 1/3-1/6 its original size, and a baby instant oats having a flake thickness of 0.033 cm (0.013 inches) to 0.051 cm (0.020 inches), and piece size of the oat flake 1/9 - 1/36 the original size of the native oats kernel.

2. The microwavable oat grain of claim 1 wherein the whole oats comprises 40 wt% to 50 wt% based on total weight of the batter.

3. The microwavable whole oat batter according to any of the preceding claims wherein the leavening agent is selected from the group consisting of baking powder, baking soda, monocalcium phosphate, potassium bitatrate, and mixtures thereof.

4. The microwavable whole oat batter according to any of the preceding claims wherein the texturizing agent is at least one selected from the group consisting of starches, modified starches, gum acacias, alginates, carrageenans, carboxymethylcellulose, gelatin, guar gum, locust bean gum, pectin, and xanthan gum.

5. The microwavable whole oat batter according to any of the preceding claims further comprising a food quality acid.

6. The microwavable whole oat batter according to any of the preceding claims wherein the batter further comprises flour, sugar, proteins, fruit pieces, nuts, chips, flavors, and combinations thereof.

7. A baked product prepared in the microwave with the microwavable whole oat batter according to any of the preceding claims.

8. The baked product of claim 7 wherein the product comprises muffins, cookies, cake, or bread.

9. The baked product of claim 7 or 8 wherein the baked product further comprises a topping, wherein the topping is applied pre-microwaving.

10. The baked product of claim 9 wherein the topping includes oat flakes, granola, breadcrumbs, crisps, sugar, butter, shortening, spices, flavors, and combinations thereof.

11. The baked product according to any of the preceding claims 7 to 10 wherein the product contains 20 to 30g whole grains per 56 g serving.

12. A method of making a microwavable whole oat batter according to any of the preceding claims 1-6 comprising mixing 30 wt% to 50 wt% whole oats, at least one leavening agent, and at least one texturizing agent to form a dry mixture; then adding water to the dry mixture in an amount sufficient to form a batter.

13. The method of claim 12 further comprising preparing the whole oats by removing the hulls, thermally processing to deactivate enzymes, and cooking.

14. A method of forming a baked product comprising microwaving the batter according to any of the claims 1-6.

## Patentansprüche

1. In der Mikrowelle backbarer Vollkornhaferteig, der Vollkornhafer, wenigstens ein Triebmittel, wenigstens ein Texturiermittel und Wasser aufweist; wobei der Vollkornhafer 30 Gew.-% bis 50 Gew.-% des gesamten Teiggewichts umfasst, wobei der Hafer eine Kombination aus Kleinblattflocken mit einer Flockendicke von 0,040 cm (0,016 Zoll) bis 0,051 cm (0,020 Zoll) hat, aus kleingeschnittenen Haferkernen mit 1/3 bis 1/6 ihrer ursprünglichen Größe zu Flocken gewalzt, und sofort löslichen Haferschmelzflocken mit einer Flockendicke von 0,033 cm (0,013 Zoll) bis 0,051 cm (0,020 Zoll) und einer Stückgröße der Haferflocke von 1/9 bis 1/36 der ursprünglichen Größe des nativen Haferkerns ist.

2. In der Mikrowelle backbares Haferkorn nach Anspruch 1, wobei der Vollkornhafer 40 Gew.-% bis 50 Gew.-% auf Basis des Gesamtgewichts des Teigs umfasst.

3. In der Mikrowelle backbarer Vollkornhaferteig nach einem der vorhergehenden Ansprüche, wobei das Triebmittel aus der Gruppe bestehend aus Backpulver, Backnatron, Monocalciumphosphat, Weinstein und Gemischen davon ausgewählt ist.

4. In der Mikrowelle backbarer Vollkornhaferteig nach einem der vorhergehenden Ansprüche, wobei das Texturiermittel wenigstens eines aus der Gruppe bestehend aus Stärken, modifizierten Stärken, Akaziengummis, Alginaten, Carrageenen, Carboxymethylcellulose, Gelatine, Guaran, Johannisbrotkernmehl, Pektin und Xanthan ausgewähltes ist.

5. In der Mikrowelle backbarer Vollkornhaferteig nach einem der vorhergehenden Ansprüche, der ferner eine nahrungsmittelgeeignete Säure aufweist.

6. In der Mikrowelle backbarer Vollkornhaferteig nach einem der vorhergehenden Ansprüche, wobei der Teig ferner Mehl, Zucker, Eiweiße, Fruchtstücke, Nüsse, Chips, Aromen und Kombinationen davon aufweist.

7. Backware, mit dem in der Mikrowelle backbaren Vollkornhaferteig nach einem der vorhergehenden Ansprüche in der Mikrowelle zubereitet.

8. Backware nach Anspruch 7, wobei die Ware Muffins, Kekse, Kuchen oder Brot umfasst.

9. Backware nach Anspruch 7 oder 8, wobei die Backware ferner eine Garnierung aufweist, wobei die Garnierung vor der Zubereitung in der Mikrowelle aufgetragen wird.

10. Backware nach Anspruch 9, wobei zur Garnierung Haferflocken, Granola, Semmelbrösel, Chips, Zucker, Butter, Backfett, Gewürze, Aromen und Kombinationen davon zählen.

11. Backware nach einem der vorhergehenden Ansprüche 7 bis 10, wobei die Ware pro 56-g-Portion 20 bis 30 g ganze Körner enthält.

12. Verfahren zum Herstellen eines in der Mikrowelle backbaren Vollkornhaferteigs nach einem der vorhergehenden Ansprüche 1 bis 6, das das Mischen von 30 Gew.-% bis 50 Gew.-% Vollkornhafer, wenigstens einem Triebmittel und wenigstens einem Texturiermittel zum Bilden eines Trockengemischs, dann Hinzugeben von Wasser in zum Bilden eines Teigs ausreichender Menge zu dem Trockengemisch aufweist.

13. Verfahren nach Anspruch 12, das ferner das Vorbereiten des Vollkornhafers durch Entfernen der Spelzen, thermisches Verarbeiten zum Deaktivieren von Enzymen und Kochen aufweist.

14. Verfahren zum Bilden einer Backware, die das Backen des Teigs nach einem der Ansprüche 1 bis 6 in der Mikrowelle aufweist.

## Revendications

1. Pâte à base d'avoine complète pouvant passer au four à micro-ondes comportant de l'avoine complète, au moins un agent de levage, au moins un agent de texture, et de l'eau ; dans laquelle l'avoine complète constitue de 30 % en poids à 50 % en poids du poids total de la pâte, dans laquelle l'avoine est une combinaison de flocons d'avoine à cuisson rapide ayant une épaisseur de flocons allant de 0,040 cm (0,016 pouces) à 0,051 cm (0,020 pouces), laminés à partir d'un gruau coupé de 1/3 à 1/6 de sa taille d'origine, et d'avoine instantanée pour bébé ayant une épaisseur de flocons allant de 0,033 cm (0,013 pouces) à 0,051 cm (0,020 pouces), et une taille de morceau de flocon d'avoine allant de 1/9 à 1/36 de la taille d'origine du grain d'avoine d'origine.

2. Grain d'avoine pouvant passer au four à micro-ondes selon la revendication 1, dans lequel l'avoine complète constitue de 40 % en poids à 50 % en poids en fonction du poids total de la pâte.

3. Pâte à base d'avoine complète pouvant passer au four à micro-ondes selon l'une quelconque des revendications précédentes, dans laquelle l'agent de levage est sélectionné dans le groupe constitué par de la levure chimique, du bicarbonate de soude, du phosphate monocalcique, du bitartrate de potassium, et des mélanges de ceux-ci.

4. Pâte à base d'avoine complète pouvant passer au four à micro-ondes selon l'une quelconque des revendications précédentes, dans laquelle l'agent de texture est au moins l'un sélectionné dans le groupe constitué par des amidons, des amidons modifiés, des gommes arabiques, des alginates, des carraghénines, de la carboxyméthylcellulose, de la gélatine, de la gomme de guar, de la gomme de caroube, de la pectine, et de la gomme de xanthane.

5. Pâte à base d'avoine complète pouvant passer au four à micro-ondes selon l'une quelconque des revendications précédentes, comportant par ailleurs un acide de qualité alimentaire.

6. Pâte à base d'avoine complète pouvant passer au four à micro-ondes selon l'une quelconque des revendications précédentes, dans laquelle la pâte comporte par ailleurs de la farine, du sucre, des protéines, des morceaux de fruit, des noix, des pépites, des arômes, et des combinaisons de ceux-ci.

7. Produit cuit au four préparé dans le four à micro-ondes avec la pâte à base d'avoine complète pouvant passer au four à micro-ondes selon l'une quelconque des revendications précédentes.

8. Produit cuit au four selon la revendication 7, dans lequel le produit comporte des muffins, des petits gâteaux, du gâteau, ou du pain.

9. Produit cuit au four selon la revendication 7 ou la revendication 8, dans lequel le produit cuit au four comporte par ailleurs une garniture, dans lequel la garniture est placée avant le passage au four à micro-ondes.

10. Produit cuit au four selon la revendication 9, dans lequel la garniture comprend des flocons d'avoine, du granola, des miettes de pain, des chips, du sucre, du beurre, de la matière grasse, des épices, des arômes, et une combinaison de ceux-ci.

11. Produit cuit au four selon l'une quelconque des revendications précédentes 7 à 10, dans lequel le produit contient de 20 à 30 g de grains complets par portions de 56 g.

12. Procédé permettant de réaliser une pâte à base d'avoine complète pouvant passer au four à micro-ondes selon l'une quelconque des revendications précédentes 1 à 6, comportant l'étape consistant à mélanger de 30 % en poids à 50 % en poids d'avoine complète, au moins un agent de levage, et au moins un agent de texture pour former un mélange sec ; puis l'étape consistant à ajouter de l'eau dans le mélange sec selon une quantité suffisante pour former une pâte.

13. Procédé selon la revendication 12, comportant par ailleurs l'étape consistant à préparer l'avoine complète en retirant les coques, l'étape consistant à effectuer un traitement thermique pour désactiver les enzymes, et l'étape consistant à cuire.

14. Procédé permettant de former un produit cuit au four comportant l'étape consistant à faire passer au four à micro-ondes la pâte selon l'une quelconque des revendications 1 à 6.
